# EUROPEAN PATENT APPLICATION

(11) **EP 3 888 474 A1**
(43) Date of publication of application: **06.10.2021**
(21) Application number: 18941784.3
(22) Date of filing: 30.11.2018
(51) Int. Cl.: A23L 7/157, A23L 5/10

(54) **BATTER FOR FRIED FOOD**

(71) Applicant: Nisshin Foods Inc., Tokyo 101-8441 (JP)
(72) Inventor: ITO, Takashi, Tokyo 103-8544 (JP); TSUJI, Akito, Tokyo 103-8544 (JP); TAKASU, Ryosuke, Tokyo 103-8544 (JP); ISHIKAWA, Yasuyoshi, Tokyo 103-8544 (JP); SHIGEMATSU, Toru, Tokyo 103-8544 (JP); HIWATASHI, Souichiro, Tokyo 103-8544 (JP)
(74) Representative: Schiener, Jens
(86) International application number: PCT/JP2018/044254
(87) International publication number: WO 2020/110307

(57) **Abstract**

Provided are a fried food having a favorable appearance and an improved coating texture, and a batter for producing the same. The batter for fried foods contains a flaky starch lump. The starch lump contains a pregelatinized starch, and the flaky starch lump has a thickness of 100 µm to 1000 µm.

## Description

### Technical Field

The present invention relates to a batter for fried foods.

### Background Art

A fried food is usually produced by attaching a batter to surfaces of various food ingredients and deep-frying the food ingredients to which the batter is attached. A general batter for fried foods is roughly classified into a powdered batter (breader) and a liquid batter (batter liquid). The batter not only prevents oil absorption and moisture evaporation in a food ingredient covered with the batter during deep-frying but also imparts a favorable texture, flavor, and appearance to a fried food when the batter itself is cooked by deep-frying.

Meanwhile, coating may have a greasy and smeary texture, or a sticky or too hard texture, and such coating reduces favorability of texture of a fried food. For appearance of a fried food, desirably, coating on a surface is rough, mat and does not look greasy, and has irregularities like rocks. However, the coating having a greasy and smeary texture or a sticky texture as described above often also reduces favorability of the appearance of a fried food. The quality of texture and appearance of coating after deep-frying is not a little affected by a cooking operation, but also affected by the material and composition of a batter. Various types of batters have been conventionally provided in order to improve the texture and appearance of a fried food.

Patent Literature 1 describes a batter containing finely crushed cereal flour or starch having an average particle size of less than 20 µm. Patent Literature 2 describes a deep-fry powder mainly containing potato starch in which 95% weight or more of particles have a particle size of 20 µm or more. Patent Literature 3 describes a lump breader containing a lump, in which the lump is produced by adding a foamed egg liquid to a breader mainly containing cereal flour or starch, and has an irregular shape such as a particle shape or a flat shape having a major axis of 0.5 to 20 mm. Patent Literature 4 describes a powdered liquid-loaded starch material containing a solid carrier material consisting of a pregelatinized non-granular starch material consisting of flake-shaped starch particles, in which at least 50% by weight of the starch particles have a size distribution of 100 to 375 µm, the starch particles have a BET specific surface area of 0.5 m²/g or less, and a liquid component is absorbed inside and/or on a surface of the solid carrier material.

### Citation List

### Patent Literature

Patent Literature 1: JP 2003-265130 A
Patent Literature 2: JP 2000-350561 A
Patent Literature 3: JP 2005-151876 A
Patent Literature 4: WO 2009/103514 A

### Summary of Invention

### Technical Problem

The present invention provides a fried food having a favorable appearance and an improved texture of coating, and a batter for producing the same.

### Solution to Problem

By using a flaky starch lump having a predetermined size as a material of a batter for fried foods, the present inventors found that a fried food having a unique appearance as if the fried food is covered with small sword-shaped flakes and that the fried food has a light texture that is crispy and non-greasy.

Therefore, the present invention provides a batter for fried foods, the batter containing a flaky starch lump, in which
the starch lump contains a pregelatinized starch,
the flaky starch lump has a thickness of 100 µm to 1000 µm, and
the content of a liquid component in the flaky starch lump is less than 20%.

The present invention also provides use of a flaky starch lump in producing a batter for fried foods, in which the starch lump contains a pregelatinized starch,
the flaky starch lump has a thickness of 100 µm to 1000 µm, and
the content of a liquid component in the flaky starch lump is less than 20%.

The present invention also provides use of a flaky starch lump as a batter for fried foods, in which
the starch lump contains a pregelatinized starch,
the flaky starch lump has a thickness of 100 µm to 1000 µm, and
the content of a liquid component in the flaky starch lump is less than 20%.

The present invention also provides a method for producing a fried food, the method including attaching the batter for fried foods to a food ingredient and deep-frying the food ingredient to which the batter is attached.

### Advantageous Effects of Invention

A fried food obtained by using the batter for fried foods of the present invention has coating with a light texture that is crispy and non-greasy. In addition, a fried food obtained by using the batter of the present invention has a unique appearance as if the fried food is covered with small sword-shaped flakes (or bristling scaly flakes), and this appearance reminds a consumer of the above-described light texture of coating that is crispy, and therefore stimulates an appetite of a consumer.

### Description of Embodiments

The present invention provides a starch material for use as a batter for fried foods. The starch material is a flaky starch lump. The flaky starch lump used in the present invention can be produced by, for example, dispersing starch in water to prepare a starch slurry, forming the starch slurry into a thin sheet, heating and drying the starch slurry, crushing the obtained sheet-shaped starch, and forming the crushed starch into flakes. The starch slurry can be a clay-like slurry or a solution-like slurry by changing a ratio between starch and water. About 50 to 150 parts by mass of water with respect to 100 parts by mass of starch provides a clay-like slurry, and 150 parts by mass or more of water with respect to 100 parts by mass of starch provides a solution-like slurry. While drying time of the clay-like slurry can shortened, it is difficult to adjust the thickness thereof uniformly. Meanwhile, while the thickness of the solution-like slurry can be easily made uniform, it takes time to dry the solution-like slurry. The sheet-shaped starch can be dried by a usual method using a device such as a drum dryer, a flash dryer, or an oven. Of these devices, a drum dryer is preferable from a viewpoint of efficiency in sheet forming and a drying step. Water used to prepare the starch slurry may contain a seasoning and a pigment. As a result, a function of adjusting the taste and color of a fried food can be imparted to an obtained flaky starch lump.

The flaky starch lump used in the present invention only needs to have a thickness of 100 µm to 1000 µm. Here, the "thickness direction" of the flaky starch lump refers to a direction in which the average size of the three-dimensional shape of the starch lump is the smallest, and more simply, a direction orthogonal to a plane having a maximum area on flakes of the starch lump. Here, the "thickness" of the flaky starch lump refers to a maximum length in the thickness direction. The "thickness" of the flaky starch lump does not need to be constant. That is, the individual starch lumps may have different "thicknesses", and the length of one starch lump in the thickness direction does not have to be constant as long as the maximum length is within the above range. Note that starch generally used for food has a particle shape such as a spherical shape or a polygonal shape, and has a particle size of around 2 to 80 µm. The flaky starch lump having a thickness of 100 µm to 1000 µm used in the present invention has a size that does not pass through a sieve having an opening of 100 µm. Therefore, a sheet-shaped starch having a thickness of 1000 µm is formed by the above-described procedure and then crushed. The obtained starch lump is sieved using a sieve having an opening of 100 µm, and a fraction that does not pass through the sieve is collected, thus obtaining a flaky starch lump having a thickness of 100 µm to 1000 µm, used in the present invention. By using a batter containing a flaky starch lump having this size, it is possible to produce a fried food having coating with a light texture that is crispy and non-greasy and having a unique appearance as if the fried food is covered with small sword-shaped flakes. The thickness of the flaky starch lump used in the present invention is preferably 180 µm to 800 µm, and more preferably 250 µm to 650 µm from a viewpoint of further improving the appearance of a fried food and the texture of coating. The flaky starch lump having this size can be prepared by changing the thickness of the sheet-shaped starch to be formed, changing the size of the opening of a sieve to be used, and performing a similar procedure to the above.

More preferably, the flaky starch lump used in the present invention contains a fraction with a size that does not pass through a sieve having an opening of 400 µm and passes through a sieve having an opening of 2000 µm preferably in an amount of 50% by mass or more, more preferably in an amount of 60% by mass or more, still more preferably in an amount of 70% by mass or more, further still more preferably in an amount of 80% by mass or more in the total mass of the flaky starch lump. By increasing the ratio of the above fraction having a specific size in the flaky starch lump, the appearance of a fried food and the texture of coating can be further improved. Such a fraction can be prepared by further sieving the fraction that does not pass through a sieve having an opening of 100 µm (preferably 180 µm, more preferably 250 µm) collected above using a sieve having an opening of 2000 µm and a sieve having an opening of 400 µm, and collecting a fraction that passes through a sieve having an opening of 2000 µm and does not pass through a sieve having an opening of 400 µm.

The type of starch used as a raw material of the flaky starch lump used in the present invention is not particularly limited as long as starch can be used for food, and examples thereof include potato starch, tapioca starch, cornstarch, waxy cornstarch, rice starch, and wheat starch. Among these starches, above-ground starch derived from an above-ground part of a plant is preferable. Examples of the above-ground starch include rice starch, wheat starch, cornstarch, and waxy cornstarch. Out of these starches, wheat starch, cornstarch, and waxy cornstarch are preferable, and cornstarch is more preferable. A processed starch of any one of the starches exemplified above may be used. The processed starch can be prepared by subjecting any one of the starches exemplified above to processing such as oil and fat processing, pregelatinization, etherification, esterification, crosslinking, oxidation, or a combination thereof.

Preferably, the flaky starch lump used in the present invention contains a pregelatinized starch. More preferably, starch contained in the flaky starch lump is formed of a pregelatinized starch. When the starch lump contains a pregelatinized starch, a texture having a more preferable crispy texture with less greasiness can be imparted to coating of a fried food. The degree of pregelatinization of the starch lump used in the present invention is preferably 50% or more, more preferably 60% or more, and still more preferably 75% or more. The degree of pregelatinization of the starch lump is preferably 95% or less. Here, the degree of pregelatinization of starch is determined by a β-amylase/pullulanase (BAP) method (see Jap. Soc. Starch Sci, 28 (4): 235-240 (1981)).

The flaky starch lump used in the present invention is provided in a form of dry flakes and can be applied to a food ingredient or can be blended with another batter component. The flaky starch lump is preferably a powder having the above-described size. The flaky starch lump may contain a liquid component such as water. However, the content of the liquid component is preferably less than 20% by mass, and more preferably 15% by mass or less in the total mass of the flaky starch lump. The flaky starch lump may also contain another material such as the above-described seasonings and pigments, and cereal flour. The content of the other material in the starch lump is preferably 5% by mass or less based in the total mass of the starch lump.

The above-described flaky starch lump is used for producing a fried food as a batter. Therefore, the present invention provides a batter for fried foods, the batter containing the above-described flaky starch lump. By blending the flaky starch lump with another batter component, if necessary, the batter for fried foods of the present invention (hereinafter, also simply referred to as the batter of the present invention) is produced. The content of the flaky starch lump in the batter of the present invention is preferably 5 to 100% by mass, more preferably 10 to 90% by mass, and still more preferably 15 to 70% by mass in the total mass of the batter. When the content of the flaky starch lump in the batter of the present invention is less than 5% by mass, an effect of improving the appearance of a fried food and the texture of coating is reduced.

The flaky starch lump in the batter of the present invention contains a fraction with a size that does not pass through a sieve having an opening of 400 µm and passes through a sieve having an opening of 2000 µm preferably in an amount of 50% by mass or more, more preferably in an amount of 60% by mass or more, still more preferably in an amount of 70% by mass or more, further still more preferably in an amount of 80% by mass or more in the total mass of the flaky starch lump, from a viewpoint of further improving the appearance of a fried food and the texture of coating. For example, when the batter of the present invention contains the flaky starch lump in an amount of 15 to 70% by mass, the content of the fraction with a size that does not pass through a sieve having an opening of 400 µm and passes through a sieve having an opening of 2000 µm in the batter of the present invention can be preferably 7.5 to 70% by mass, more preferably 9 to 70% by mass, still more preferably 10.5 to 70% by mass, and further still more preferably 12 to 70% by mass in the total mass of the batter. Alternatively, in another example, the content of the fraction may be 20 to 70% by mass, 25 to 70% by mass, 30 to 70% by mass, or 30 to 50% by mass in the total mass of the batter.

The batter of the present invention may be a composition containing another component which is a component other than the above-described flaky starch lump. Examples of the other component include: cereal flour such as wheat flour or rice flour; starch other than the flaky starch lump or processed starch; egg flour such as whole egg flour or egg white flour; a thickener; a swelling agent; a seasoning such as common salt, powdered soy sauce, a fermented seasoning, powdered soybean paste, or an amino acid; a spice; a fragrance; a nutritional component such as vitamin or mineral; a coloring agent; powdered oil and fat; and salts. These other components can be used singly or in combination of two or more types thereof depending on desired characteristics of a fried food. The total content of these other components is preferably 95% by mass or less, more preferably 90% by mass or less, and still more preferably 85% by mass or less in the total mass of the batter of the present invention.

The type of fried food produced using the batter of the present invention is not particularly limited, and examples thereof include a deep-fried food, fried chicken, and a fried food with bread crumbs such as a cutlet. A food ingredient of a fried food is not particularly limited, and examples thereof include livestock meat such as chicken, pork, beef, mutton, or goat meat; seafood; and vegetables. A food ingredient to which the batter of the present invention is applied is preferably meat or seafood. The food ingredient may be seasoned before the batter of the present invention is applied thereto. A method for seasoning the food ingredient is not particularly limited, and a known method can be used. For example, the food ingredient may be soaked in a powder or a liquid containing seasonings, herbs, spices, sugars, amino acids, thickening polysaccharides, and enzymes.

In producing a fried food using the batter of the present invention, typically, the batter of the present invention is attached to a food ingredient, and the ingredient to which the batter is attached is deep-fried. A method for attaching the batter of the present invention to a food ingredient is not particularly limited. The powdered batter of the present invention may be attached to a food ingredient, or a batter liquid containing the batter of the present invention may be attached to a food ingredient. Depending on the type of fried food to be produced, before the batter of the present invention is attached to a food ingredient, for example, cereal flour, starch, an egg liquid, or a batter liquid not containing the batter of the present invention may be attached to the food ingredient. When a fried food with bread crumbs is produced, bread crumbs may be attached to a food ingredient to which an egg liquid or a batter liquid are attached together with the batter of the present invention. Meanwhile, it is preferable to attach the powdered batter of the present invention to a food ingredient from a viewpoint of maintaining the shape of the flaky starch lump in the batter and imparting a unique appearance characteristic as if a produced fried food is covered with small sword-shaped flakes to the produced fried food. In addition, it is preferable not to attach another batter to the same layer as the batter of the present invention or an upper layer thereof from a viewpoint of maintaining the appearance characteristic of a produced fried food.

Preferably, the powdered batter of the present invention is sprinkled on a food ingredient and attached thereto. Examples of a method for the "sprinkling" include a general sprinkling operation, for example, 1) an operation of sprinkling the batter from above a food ingredient, 2) an operation of putting the batter and a food ingredient into a bag, and shaking the bag with an opening of the bag closed, or 3) an operation of laying the batter in a relatively wide container such as a plate, and rolling a food ingredient on the batter. Meanwhile, examples of a method for attaching a batter liquid containing the batter of the present invention to a food ingredient include immersing the food ingredient in the batter liquid and spraying the batter liquid onto the food ingredient.

A food ingredient to which the batter is attached can be deep-fried according to a usual method. For example, heating temperature (oil temperature) and heating time for deep-frying only need to be appropriately set according to the type and size of a food ingredient.

### Examples

Hereinafter, the present invention will be described in more detail with reference to Examples. However, the present invention is not limited to the following Examples.

### Test Example 1

### (Preparation of flaky starch lump)

To 100 parts by mass of commercially available cornstarch (degree of pregelatinization 2%), 100 to 400 parts by mass of water was added to prepare a slurry-like starch solution. This solution was spread on a drum dryer heated to 130 to 170°C so as to form a thin film, and heated and dried while the drum was rotated to form a thin film-shaped starch sheet. The dried starch sheet was peeled off from the drum, and the thickness of the starch sheet was measured. The starch sheet was crushed, and then the crushed sheet was sieved using a sieve having an opening of a predetermined size. A fraction remaining on the sieve was collected to obtain a flaky starch lump. At this time, by variously changing the starch concentration of the slurry-like starch solution to change the thickness of the starch sheet and changing the size of an opening of a sieve to be used, flaky starch lumps having the thicknesses illustrated in Table 1 were produced. The degree of pregelatinization was measured by a BAP method using a part of each of the obtained flaky starch lumps.

### (Preparation of batter)

50% by mass of the prepared flaky starch lump and 50% by mass of commercially available wheat flour (weak flour) were mixed to prepare batters for fried foods of Production Examples 1 to 6 and Comparative Examples 1 and 2 as illustrated in Table 1. As Reference, a batter made of wheat flour was prepared.

### (Production of fried food)

Chicken thigh was cut into pieces each having 25 g and seasoned to prepare a food ingredient. The batter prepared above was sprinkled on this food ingredient and attached thereto. The food ingredient with the batter was deep-fried with salad oil heated to 175°C for four minutes to produce deep-fried chicken. The produced fried food was evaluated for appearance and texture of coating after rough heat was removed from the fried food. In the evaluation, 10 specialized panelists scored the appearance of the fried food and the texture of the coating according to the following evaluation criteria, and an average of the scores of the 10 panelists was calculated. The evaluation results are illustrated in Table 1.

### Evaluation criteria

### (Appearance)

5: The entire surface of coating is densely covered with white and fine sword-shaped flakes, and the coating has a very dry appearance that does not make a consumer feel that the coating is greasy. Very good.
4: The surface of coating is covered with white and fine sword-shaped flakes, and the coating has a dry appearance that does not make a consumer feel that the coating is greasy. Good.
3: The surface of coating has a few white and fine sword-shaped flakes, and the coating has a slightly dry appearance with less greasiness.
2: The surface of coating has almost no white and fine sword-shaped flakes, and the coating has a wet appearance that makes a consumer feel that the coating is greasy. Poor.
1: The surface of coating has no white and fine sword-shaped flakes, and the coating has a very wet appearance that makes a consumer strongly feel that the coating is greasy. Very poor.

### (Texture of coating)

5: Very good because the coating is very light and crispy, and does not make a consumer feel at all that the coating is greasy.
4: Good because the coating is light and crispy, and does not make a consumer feel that the coating is greasy.
3: The coating is slightly crispy, and makes a consumer slightly feel that the coating is greasy.
2: Poor because the coating has no crispness, is slightly hard or slightly sticky, and makes a consumer feel that the coating is greasy.
1: Very poor because the coating has no crispness, is hard or sticky, and makes a consumer strongly feel that the coating is greasy.

**[Table 1]**

| Composition of batter (% by mass) | Production Example | | | | | | Comparative Example | | Refer ence |
|---|---|---|---|---|---|---|---|---|---|
| | 1 | 2 | 3 | 4 | 5 | 6 | 1 | 2 | |
| Flaky starch lump (cornstarch) | 50 | 50 | 50 | 50 | 50 | 50 | 50 | 50 | - |
| Thickness (µm) | 100 | 180 | 250 | 450 | 800 | 1000 | 60 | 1200 | - |
| Degree of pregelatinization (%) | 56 | 58 | 61 | 75 | 79 | 82 | 55 | 85 | - |
| Wheat flour | 50 | 50 | 50 | 50 | 50 | 50 | 50 | 50 | 100 |
| Total | 100 | 100 | 100 | 100 | 100 | 100 | 100 | 100 | 100 |
| Appearance | 3.9 | 4.2 | 4.5 | 4.4 | 4.1 | 3.8 | 2.7 | 3.2 | 2.0 |
| Texture of coating | 3.6 | 4.0 | 4.3 | 4.5 | 4.2 | 3.9 | 2.8 | 2.6 | 2.4 |

### Test Example 2

In a similar procedure to Test Example 1, except that the raw material starch was changed from cornstarch to the starches illustrated in Table 2, flaky starch lumps were obtained. The degree of pregelatinization was 60% or more for each of the obtained starch lumps. Using the obtained flaky starch lumps, the batters for foods illustrated in Table 2 were prepared by a similar procedure to Test Example 1, and deep-fried chicken was produced using the batters and evaluated. The evaluation results are illustrated in Table 2 together with the results of Production Example 4.

**[Table 2]**

| Composition of batter (% by mass) | | | Production Example | | | | | |
|---|---|---|---|---|---|---|---|---|
| | | | 4 | 7 | 8 | 9 | 10 | 11 |
| Flaky starch lump | (Raw material starch) | | | | | | | |
| | Above-ground starch | Cornstarch | 50 | | | | | |
| | | Waxy cornstarch | | 50 | | | | |
| | | Wheat starch | | | 50 | | | |
| | | Rice starch | | | | 50 | | |
| | Under-ground starch | Potato starch | | | | | 50 | |
| | | Tapioca starch | | | | | | 50 |
| Thickness (µm) | | | 450 | 450 | 450 | 450 | 450 | 450 |
| Wheat flour | | | 50 | 50 | 50 | 50 | 50 | 50 |
| Total | | | 100 | 100 | 100 | 100 | 100 | 100 |
| Appearance | | | 4.4 | 4.1 | 4.3 | 4.0 | 3.8 | 3.7 |
| Texture of coating | | | 4.5 | 4.4 | 4.4 | 4.5 | 4.1 | 4.0 |

### Test Example 3

In a similar procedure to Test Example 1, except that the temperature of the drum dryer was changed, flaky starch lumps having the degrees of pregelatinization illustrated in Table 3 were obtained. Using the obtained flaky starch lumps, the batters for fried foods illustrated in Table 3 were prepared by a similar procedure to Test Example 1, and deep-fried chicken was produced using the batters and evaluated. The evaluation results are illustrated in Table 3 together with the results of Production Examples 3 and 4.

**[Table 3]**

| Composition of batter (% by mass) | Production Example | | | | | |
|---|---|---|---|---|---|---|
| | 3 | 4 | 12 | 13 | 14 | 15 |
| Flaky starch lump (cornstarch) | 50 | 50 | 50 | 50 | 50 | 50 |
| Thickness | 250 | 450 | 250 | 450 | 250 | 450 |
| Degree of pregelatinization (%) | 61 | 75 | 53 | 67 | 68 | 82 |
| Wheat flour | 50 | 50 | 50 | 50 | 50 | 50 |
| Total | 100 | 100 | 100 | 100 | 100 | 100 |
| Appearance | 4.5 | 4.4 | 4.2 | 4.2 | 4.6 | 4.6 |
| Texture of coating | 4.3 | 4.5 | 3.9 | 4.0 | 4.5 | 4.7 |

### Test Example 4

The flaky starch lump (cornstarch, thickness 450 µm, degree of pregelatinization 75%) used in Production Example 4 and wheat flour were blended at the compositions illustrated in Table 4 to prepare batters for fried foods. Using the obtained batters, deep-fried chicken was produced by a similar procedure to Test Example 1 and evaluated.
The evaluation results are illustrated in Table 4 together with the results of Production Example 4.

**[Table 4]**

| Composition of batter (% by mass) | Production Example | | | | | | | |
|---|---|---|---|---|---|---|---|---|
| | 16 | 17 | 18 | 19 | 4 | 20 | 21 | 22 |
| Flaky starch lump | 3 | 5 | 10 | 15 | 50 | 70 | 90 | 100 |
| Wheat flour | 97 | 95 | 90 | 85 | 50 | 30 | 10 | - |
| Total | 100 | 100 | 100 | 100 | 100 | 100 | 100 | 100 |
| Appearance | 3.4 | 3.7 | 3.9 | 4.1 | 4.4 | 4.2 | 4.0 | 3.9 |
| Texture of coating | 3.6 | 3.8 | 3.9 | 4.2 | 4.5 | 4.3 | 4.0 | 3.8 |

### Test Example 5

A flaky starch lump (cornstarch, thickness 450 µm, degree of pregelatinization 76%) was prepared by a similar procedure to Test Example 1. From the obtained starch lump, a fraction having a size that passes through a sieve having an opening of 2000 µm and does not pass through a sieve having an opening of 400 µm (fraction A) and a fraction that passes through a sieve having an opening of 400 µm (fraction B) were collected. The obtained fractions were mixed at the ratios illustrated in Table 5 to prepare batters for fried foods. Using the obtained batters, deep-fried chicken was produced by a similar procedure to Test Example 1 and evaluated. The results are illustrated in Table 5.

**[Table 5]**

| Composition of batter (% by mass) | Production Example | | | | |
|---|---|---|---|---|---|
| | 23 | 24 | 25 | 26 | 27 |
| Flaky starch lump (fraction A + fraction B) | 50 | 50 | 50 | 50 | 50 |
| Thickness (µm) | 450 | 450 | 450 | 450 | 450 |
| Degree of pregelatinization (%) | 76 | 76 | 76 | 76 | 76 |
| (Content of fraction A in flaky starch lump, % by mass) | (40) | (50) | (60) | (70) | (80) |
| Wheat flour | 50 | 50 | 50 | 50 | 50 |
| Total | 100 | 100 | 100 | 100 | 100 |
| Appearance | 4.2 | 4.5 | 4.6 | 4.7 | 4.8 |
| Texture of coating | 4.3 | 4.5 | 4.5 | 4.6 | 4.7 |

## Claims

1. A batter for fried foods, the batter comprising a flaky starch lump, wherein
the starch lump contains a pregelatinized starch,
the flaky starch lump has a thickness of 100 µm to 1000 µm, and
the content of a liquid component in the flaky starch lump is less than 20%.

2. The batter for fried foods according to claim 1, wherein the flaky starch lump has a degree of pregelatinization of 50% or more.

3. The batter for fried foods according to claim 1 or 2, the batter comprising 5 to 100% by mass of the flaky starch lump.

4. The batter for fried foods according to any one of claims 1 to 3, wherein the flaky starch lump contains a fraction that does not pass through a sieve having an opening of 400 µm and passes through a sieve having an opening of 2000 µm in an amount of 50% by mass or more in the total mass of the flaky starch lump.

5. The batter for fried foods according to any one of claims 1 to 4, wherein the starch is an above-ground starch.

6. The batter for fried foods according to any one of claims 1 to 5, which is in a powder form.

7. A method for producing a fried food, the method comprising attaching the batter for fried foods according to any one of claims 1 to 6 to a food ingredient and deep-frying the food ingredient to which the batter is attached.
